# EUROPÄISCHE PATENTSCHRIFT

(11) **EP 2 564 091 B1**
(45) Veröffentlichungstag und Bekanntmachung des Hinweises auf die Patenterteilung: **28.06.2017**
(21) Anmeldenummer: 11717586.9
(22) Anmeldetag: 28.04.2011
(51) Int. Cl.: F16J 15/00, F16J 15/34

(54) **ANORDNUNG MIT EINER WELLENDICHTUNG**
ASSEMBLY COMPRISING A SHAFT SEAL
ENSEMBLE PRÉSENTANT UN JOINT D'ÉTANCHÉITÉ D'ARBRE

(30) Priorität: 30.04.2010 DE 102010018873
(43) Veröffentlichungstag der Anmeldung: 06.03.2013
(73) Patentinhaber: Siemens Aktiengesellschaft, 80333 München (DE)
(72) Erfinder: GRIESHABER, Dirk, 46485 Wesel (DE)
(86) Internationale Anmeldenummer: PCT/EP2011/056708
(87) Internationale Veröffentlichungsnummer: WO 2011/135016

(56) Entgegenhaltungen:
- EP-A1- 2 063 156
- WO-A1-2010/034605
- JP-A- 2006 083 889
- US-A- 3 880 434
- US-B1- 6 325 382

## Beschreibung

Die Erfindung betrifft eine Wellendichtung zur Abdichtung eines Spaltes einer Durchführung einer Welle durch ein Gehäuse, wobei die rotierenden und statischen Elemente der Dichtung ein Dichtungsmodul bilden, wobei sich im Inneren des Gehäuses ein Prozessfluid unter einem Abdichtdruck und außerhalb des Gehäuses ein Umgebungsfluid unter einem Umgebungsdruck befindet, wobei die Wellendichtung mehr als ein Dichtungsmodul, mindestens eine Fluidzuführung und eine Fluidableitung umfasst, wobei sich der Umgebungsdruck von dem Abdichtdruck im Betriebszustand durch eine Druckdifferenz unterscheidet, welche Druckdifferenz zu Anteilen aufgeteilt an den einzelnen Dichtungsmodulen jeweils als Teildruckdifferenz anliegt, wobei die Dichtungsmodule mindestens eine erste Hauptdichtung umfassen, welche derart ausgebildet ist, dass im normalen, störungsfreien Betrieb und beim An- und Abfahren an dieser die größte Teildruckdifferenz anliegt, ausgehend vom größten Druckniveau von innen nach außen, wobei die Dichtungsmodule mindestens eine zweite Hauptdichtung umfassen die derart ausgebildet ist, dass bei Störung der ersten Hauptdichtung an dieser die größte Teildruckdifferenz anliegt, ausgehend vom größten Druckniveau von innen nach außen, wobei zwischen den beiden Haupt-Dichtungsmodulen mindestens eine Fluidableitung vorgesehen ist, mittels derer ein erstes Ableitungsfluid ausgeschleust wird. EP-A-2 063 156 offenbart ein Beispiel einer Wellendichtung. Wellendichtung der vorgenannten Art finden häufigen Einsatz insbesondere an Turbomaschinen, die eine aus dem Gehäuse herausgeführte Welle aufweisen, welche den Anschluss eines An- oder Abtriebes ermöglicht. Es liegt in der Natur der Wellendichtung, dass aufgrund der Relativbewegung der Wellenoberfläche zu dem angrenzenden Gehäuse keine hundertprozentige Dichtheit erzielt werden kann. Insbesondere bei toxischen oder explosiven Prozessfluiden, die mittels der Wellendichtung von der Umgebung ferngehalten werden sollen, müssen die Leckagen sorgfältig abgeleitet werden. Auch beispielsweise bei Dampf- oder Gasturbinen wird das Prozessfluid mittels einer derartigen Wellendichtung gehindert, in die Umgebung auszutreten und die Leckage der Wellendichtung bzw. das Quantum der Absaugung hat einen direkten Einfluss auf den sich ergebenden thermischen Wirkungsgrad. Die Minimierung der Leckagen einer Wellendichtung ist eine der wichtigsten Aufgaben im Rahmen der Gestaltung derartiger Maschinen.

Bei Turboverdichtern übernehmen sog. Tandem-Gasdichtungen häufig die Aufgabe den Druckraum innerhalb des Gehäuses zur Atmosphäre hin abzudichten. Die Tandem-Gasdichtungen sind berührungslose Dichtungen und werden mit trockenem gefiltertem Sperrfluid bzw. Sperrgas geschmiert.

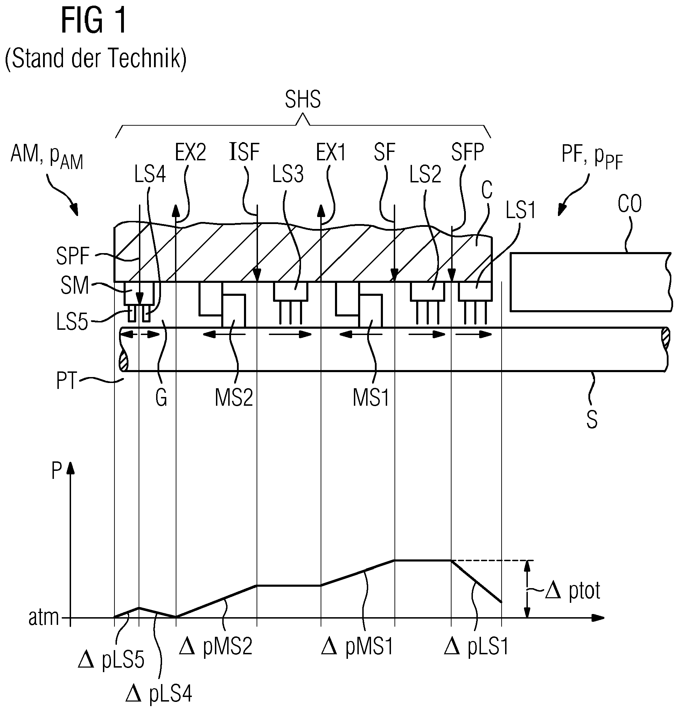

Eine herkömmliche Anordnung mit einer Wellendichtung der oben genannten Art ist in Figur 1 schematisch dargestellt. Eine Welle S erstreckt sich durch eine Durchführung PT eines Gehäuses C. Im Inneren des Gehäuses C befindet sich ein Prozessfluid PF unter einem Abdichtdruck PPF. Das Prozessfluid PF wird mittels eines Verdichters CO auf den Abdichtdruck PPF gefördert. Außerhalb des Gehäuses C befindet sich Luft AM unter einem Umgebungsdruck PAM. Ein Spalt G zwischen der Welle S und dem Gehäuse C im Bereich der Durchführung PT ist mittels einer Wellendichtung SHS abgedichtet. Die Wellendichtung SHS umfasst mehrere Dichtungsmodule SM, unter anderem zwei Hauptdichtungen, eine erste Hauptdichtung MS1 und eine zweite Hauptdichtung MS2. Die beiden Hauptdichtungen MS1, MS2 sind als Gasdichtungen DG1, DG2 bzw. Trockengasdichtungen DGS ausgebildet. Von dem Inneren des Gehäuses C ausgehend sind zunächst zwei Labyrinthdichtungen vorgesehen, ein Druckerhöhungslabyrinth LS1 und eine zweite Labyrinthdichtung LS2, zwischen denen ein Druckanhebesperrfluid SFP eingeleitet wird. Das Druckerhöhungslabyrinth LS1 und das Druckanhebesperrfluid SFP haben den Zweck den Abdichtdruck auf ein mindestens erforderliches Druckniveau zu erhöhen und sind nur erforderlich wenn der vorhandene Druck im Verdichter geringer ist, als das mindestens erforderliche Druckniveau. Zwischen der ersten Hauptdichtung MS1 und der zweiten, äußeren Labyrinthdichtung LS2 wird außerdem ein Sperrfluid in den Spalt G zugeleitet. In Folge der Zuleitung des Sperrfluids SF ergibt sich durch die erste Hauptdichtung MS1 ein Massenstrom nach außen und ein Massenstrom durch das Labyrinth LS2 in Richtung Verdichter. Dieser Massenstrom ist in der Regel relativ gering und baut keinen nennenswerten Differenzdruck im Labyrinth LS2 auf. Der Massenstrom des Druckanhebesperrfluids SFP ist so bemessen, dass er zusammen mit dem Massenstrom des Sperrfluids SF der durch das Labyrinth LS2 strömt, einen Differenzdruck im Druckerhöhungslabyrinth LS1 aufstaut, der in Addition zum Druck im Verdichter dem mindestens erforderliche Druckniveau entspricht. Dieser Massenstrom strömt zurück in das Innere des Gehäuses C. Zwischen der ersten Hauptdichtung MS1 und der zweiten Hauptdichtung MS2 ist eine dritte Labyrinthdichtung LS3 vorgesehen. Zwischen der dritten Labyrinthdichtung LS3 und der zweiten Hauptdichtung MS2 wird ein Zwischensperrfluid ISF in den Spalt G eingeleitet. Während es sich bei dem Sperrfluid SF um Prozessfluid PF handelt, ist das Zwischensperrfluid ISF entweder ein Inertfluid bzw. Inertgas oder das Umgebungsmedium, meist Stickstoff.

Zwischen der ersten Hauptdichtung MS1 und der zweiten Hauptdichtung MS2 und zwar inwärtig der dritten Labyrinthdichtung LS3 wird das sich dort sammelnde Gemisch aus dem Sperrfluid SF und dem Zwischensperrfluid ISF bzw. aus dem Prozessfluid und dem Inertfluid bzw. Umgebungsfluid zu einer nachfolgenden, nicht näher dargestellten Aufbereitung abgeleitet. Die Aufbereitung kann auch eine Fackel sein, mittels derer das Gemisch abgefackelt wird. Auswärtig der zweiten Hauptdichtung MS2 befindet sich häufig noch eine zusätzliche Tandemanordnung einer Labyrinthdichtung, bestehend aus zwei Dichtungen LS4, LS5, zwischen denen ein Separationsfluid SPF eingeleitet wird. Ein Gemisch aus dem Separationsfluid SPF und dem Zwischensperrfluid ISF, welches in auswärtige Richtung durch die zweite Hauptdichtung MS2 als Leckage strömt, wird mittels einer zweiten Ableitung EX2 zu einer Aufbereitung oder ebenfalls zu einer Fackel geführt.

Unterhalb der Dichtungsanordnung zeigt Fig. 1 den Durckverlauf über die Axialrichtung, aus dem die Strömungsrichtungen durch die Dichtungen resultiert. Die Trockengasdichtungen sind hinsichtlich der Durchströmung nicht beliebig umkehrbar. Insofern muss unter bestimmten Betriebsbedingungen eine erhöhte Menge Druckanhebesperrfluid SFP zugeführt werden.

Die in der Figur 1 gezeigte Anordnung der Gasdichtung wird auch als Tandemgasdichtung bezeichnet. In der Bauart der Tandemgasdichtung, mit oder ohne Labyrinth zwischen den beiden Hauptdichtungen, wird das Zwischensperrfluid nur bei der Bauart mit Labyrinth benötigt. Bei einem Zwischensperrfluid handelt es sich normalerweise um Stickstoff aus einer externen Quelle. Sowohl Teilmengen des Sperrfluids SF zwischen der Hauptdichtung MS1 und der Zusatzwellendichtung LS2 als auch Teilmengen des Zwischensperrfluids ISF zwischen der Hauptdichtung MS2 und einer benachbarten Zusatzwellendichtung LS3 werden der ersten Ableitung EX1 zugeleitet, wobei die Drücke, wie in dem in Figur 1 unterhalb der schematischen Darstellung gezeigten Druckverlauf derart gewählt sind, dass der Großteil der zugeleiteten Fluidmenge in die erste Ableitung EX1 gelangt. Ein kleinerer Teil des Zwischensperrfluids gelangt durch die zweite Hauptdichtung MS2 in die zweite Ableitung EX2. Die Zusatzwellendichtungen LS4 und LS5 mit dem zugeleiteten Separationsfluid SPF dient im Wesentlichen der Abschirmung der zweiten Hauptdichtung MS2 von Verunreinigung der Umgebung AM, welche durch beispielsweise Ölnebel aus einem benachbarten Lager verunreinigt sein kann. Das Separationsfluid tritt zum Teil in die Umgebung AM aus und zum Teil wird es in der zweiten Ableitung EX2 abgeleitet. Für das Dichtungsmodul SM bestehend aus den Zusatzwellendichtungen LS4, LS5 können auch Kohleringe oder andere Dichtungstypen verwendet werden.

Bei niedrigen Abdichtdrücken kommt es vor, dass der Abdichtdruck mittels des zusätzlichen Druckanhebesperrfluids SFP in dem ersten Druckerhöhungslabyrinth LS1 erhöht werden muss, damit ein Druckgefälle zur ersten Ableitung EX1 vorliegt. Dies insbesondere deshalb, weil die als Gasdichtung ausgebildete erste Hauptdichtung MS1 stets ein Druckgefälle von dem abzudichtenden Raum bzw. dem Abdichtdruck in auswärtige Richtung benötigt, um mit der Rotation der Welle nicht zerstört zu werden. Ebenfalls muss die zweite Hauptdichtung MS2 stets mit einem Druckgefälle Δ pMS2 beaufschlagt sein, um eine ordnungsgemäße Funktion und Überwachung sicherzustellen. Eine ordnungemäße Überwachung eines ausreichenden Druckgefälles über die zweite Hauptdichtung MS2 hat auch einen wichtigen Sicherheitsaspekt bei dieser Dichtungsart, denn eine schadhafte erste Hauptdichtung MS1 ist durch Druckanstieg oder Mengenanstieg bei der Fluidausleitung EX1 nur dann festzustellen, wenn die zweite Hauptdichtung MS2 zu diesem Zeitpunkt einwandfrei funktionsfähig ist. Dieses Druckgefälle über die zweite Hauptdichtung MS2 ist zum Druckgefälle Δ pMS1 hinzuzurechnen und muss in einem Druckerhöhungslabyrinth LS1 zur Prozessseite aufgestaut werden. Je nach dem, wie hoch die Druckdifferenz Δ pLS1 über das Druckerhöhungslabyrinth LS1 angehoben werden muss, sind hierzu erhebliche Mengen an Druckanhebesperrfluid SFP erforderlich. Dies wiederum verschlechtert den Wirkungsgrad der Gesamtanlage erheblich.
Die Erfindung hat es sich daher zur Aufgabe gemacht, die Anordnung mit der Wellendichtung der eingangs genannten Art derart zu verbessern, dass der Bedarf an Dichtungsfluiden abnimmt, ohne dass es zu Einbußen hinsichtlich der Dichtigkeit und der Sicherheit des Betriebs kommt.
Zur Lösung der erfindungsgemäßen Aufgabe wird eine Anordnung gemäß Anspruch 1 vorgeschlagen. Wenn in der Folge die Begriffe inwärtig oder auswärtig, innen oder außen benutzt werden, bezieht sich diese Richtungsangabe auf eine zunehmende oder abnehmende Nähe zu dem Inneren des Gehäuses bzw. dem Äußeren des Gehäuses.

Durch die erfindungsgemäßen Merkmale ergeben sich besondere Vorteile. Die Sperrfluidmenge wird stark vermindert, da gegenüber den in Figur 1 dargestellten herkömmlichen Anordnung die Druckdifferenz über der äußeren zweiten Hauptdichtung MS1 nicht mehr zusätzlich aufgestaut werden muss, so dass auf eine Druckanhebung mittels des Druckanhebesperrfluids bei niedrigen Abdichtdrücken ganz oder teilweise verzichtet werden kann. Da die radiale Doppeldichtung ein Druckgefälle des eintretenden Sperrfluids zu beiden Seiten benötigt, bzw. erzeugt, kann der Druck zwischen den beiden Hauptdichtungen bis auf Atmosphärendruck abgesenkt werden. Aufgrund des Entfallens oder der Reduzierung der Druckanhebung über Druckerhöhungslabyrinth LS1 werden die internen kreisenden Mengen an zu verdichtendem Fluid verringert und der volumetrische Wirkungsgrad beispielsweise eines Verdichters verbessert. Schließlich wird es möglich, die Radiale Doppeldichtung als zweite Hauptdichtung direkt über die Zufuhr des Sperrfluids zu überwachen und somit die Abschaltsicherheit bei einem Schaden der ersten Hauptdichtung MS1 durch eine Drucküberwachung oder Mengenüberwachung in der Fluidausleitung EX1 sicherzustellen.
Bevorzugt ist der stehende Träger der radialen Doppeldichtung der zweiten Hauptdichtung MS2 mittels eines elastischen Elements in Richtung des rotierenden Trägers vorgespannt. Auf diese Weise ist die der Fliehkraft ausgesetzte Konstruktion des Rotors weniger kompliziert ausgebildet.

Die Dichtflächenpaare sind bevorzugt koaxial angeordnet, so dass sich ein einfacher und platzsparender Aufbau ergibt.

Ein optimaler Betrieb der erfindungsgemäßen Dichtungsanordnung sieht vor, dass die zweite Hauptdichtung mit Prozessfluid als Sperrfluid beaufschlagt ist.

Die erste Hauptdichtung kann als eine einfache Trockengasdichtung ausgebildet sein. Das Zwischensperrfluid ist hierbei beispielsweise Stickstoff. Entscheidend ist die Gewährleistung, dass die zweite Hauptdichtung in jedem Betriebspunkt zu beiden Seiten eine positive Druckdifferenz aufweist und sich damit ein stabiler Fluidfilm zwischen den gegenüberliegenden Dichtflächen der Dichtflächenpaare ergibt. Somit entfällt das Erfordernis, einen entsprechenden Druck in der Ableitung zwischen den Hauptdichtungen aufzustauen,
Eine vorteilhafte Ausbildung der Erfindung sieht vor, dass die erste Zusatzwellendichtung LS3 eine Labyrinthwellendichtung ist. Auf diese Weise wird sichergestellt, dass keine Leckagen der ersten Hauptdichtung MS1 über die zweite Hauptdichtung MS2 in die zweite Ableitung EX2 gelangen. Bei der Ausbildung mit dieser ersten Zusatzwellendichtung ist es zweckmäßig, wenn die erste Sperrfluidableitung auf der inwärtigen Seite dieser Zusatzwellendichtung zwischen den beiden Hauptdichtungen angeordnet ist.
Eine vorteilhafte Weiterbildung der Erfindung sieht vor, dass zwischen der zweiten Hauptdichtung MS2 und dieser vorgenannten Zusatzwellendichtung LS3 eine Zuführung von einem Zwischensperrfluid ISF vorgesehen ist.
Aus gleichen Gründen, wie die erste Zusatzwellendichtung zwischen den beiden Hauptdichtungen angeordnet ist, ist es zweckmäßig, inwärtig der ersten Hauptdichtung MS1 eine zweite Zusatzwellendichtung, bevorzugt ausgebildet als Labyrinthwellendichtung vorzusehen. Wenn das Prozessfluid mit Partikeln oder sonstigem Schmutz belastet ist, ist es zweckmäßig, zwischen der ersten Hauptdichtung und der zweiten Zusatzwellendichtung eine Zuführung von einem Spülfluid vorzusehen, welches bevorzugt gereinigtes Prozessfluid ist. Dieses Spülfluid hat gegenüber dem Prozessfluid bevorzugt einen Überdruck.
Zur Abschottung des empfindlichen Wellendichtungssystems kann es außerdem zweckmäßig sein, wenn auswärtig der zweiten Hauptdichtung zusätzlich zwei Wellendichtungen, bevorzugt Labyrinthwellendichtungen hintereinander angeordnet sind, eine innere dritte Zusatzwellendichtung und eine äußere vierte Zusatzwellendichtung. Die Abschottung wird besonders effektiv, wenn zwischen diesen beiden Zusatzwellendichtungen eine Zuleitung eines Separationsfluids vorgesehen ist. Bei diesen Separationsfluid kann es sich um gefiltertes Umgebungsmedium handeln. Eine derartige Anordnung ist besonders interessant, wenn auswärtig der gesamten Dichtungsanordnung beispielsweise ein Öllager vorgesehen ist, aus dem austretende Ölnebel in die Dichtungsanordnungen gelangen können und zu ggf. gefährlichen Fluidmischungen führen würden.

Das zugeleitete Separationsfluid kann zweckmäßig zwischen der zweiten Hauptdichtung und den beiden hintereinander angeordneten dritten und vierten Zusatzwellendichtungen mittels einer zweiten Ableitung abgeleitet werden.

Die Ableitungen können ggf. in einer gemeinsamen Fackel einer Verbrennung zugeführt werden.

Im Folgenden ist die Erfindung anhand von Ausführungsbeispielen unter Bezugnahme auf Zeichnungen näher beschrieben. Neben den in den Ausführungsbeispielen aufgeführten Ausbildungen der Erfindung ergeben sich auch für den Fachmann aus der Beschreibung zusätzlicher Ausführungsmöglichkeiten. Es zeigen:
- Figur 1: eine schematische Darstellung einer herkömmlichen Anordnung.
- Figur 2: eine beispielhafte Darstellung einer radialen Doppeldichtung,
- Figur 3 bis 4: jeweils ein Ausführungsbeispiel einer erfindungsgemäßen Anordnung in schematischer Darstellung.

Die Pfeile unter Dichtungsmodulen SM zeigen jeweils die sich im Nennbetrieb einstellende Strömungsrichtung an.

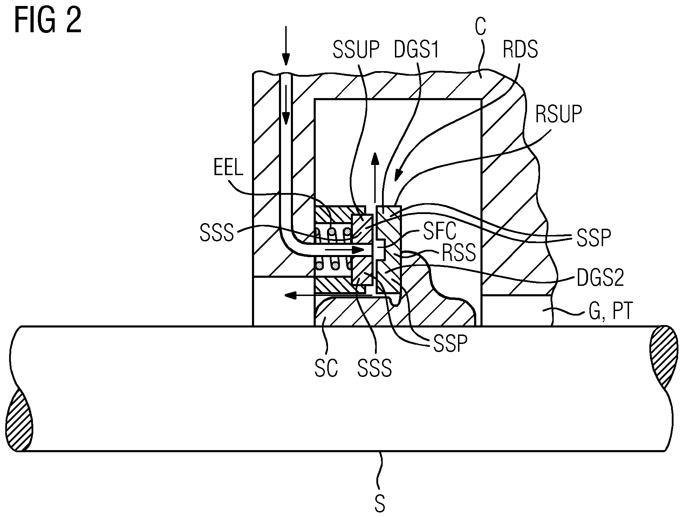

Figur 2 zeigt eine schematische Darstellung einer radialen Doppeldichtung RDS, die einen Spalt G zwischen einer Welle S und einem Gehäuse C abdichtet. Im Bereich einer Durchführung PT der Welle S durch das Gehäuse C ist die Welle S mit einem umlaufenden Absatz SC versehen, der einen rotierenden Teil der radialen Doppeldichtung RDS trägt. Die radiale Doppeldichtung besteht im Wesentlichen aus zwei radial hintereinander angeordneten Gasdichtungen DGS1, DGS2, die jeweils eine rotierende Dichtfläche RSS und eine stehende Dichtfläche SSS aufweisen, die entsprechend zwei Dichtflächenpaare SSP ergeben. Zwischen den beiden Dichtflächenpaaren SSP wird ein Sperrfluid SF in eine dort befindliche, sich in Umfangsrichtung erstreckende Kammer SFC zugeführt, welches aufgrund des Überdrucks zwischen der rotierenden Dichtfläche RSS und der stehenden Dichtfläche SSS jeweils der beiden Dichtflächenpaare SSP entweicht. Die rotierenden Dichtflächen RSS und die stehenden Dichtflächen SSS der beiden Dichtflächenpaare SSP sind fest miteinander mittels eines gemeinsamen Trägers RSUP, SSUP verbunden. Der stehende Träger SSUP ist mittels eines elastischen Elementes EEL gegen den rotierenden Träger RSUP vorgespannt.

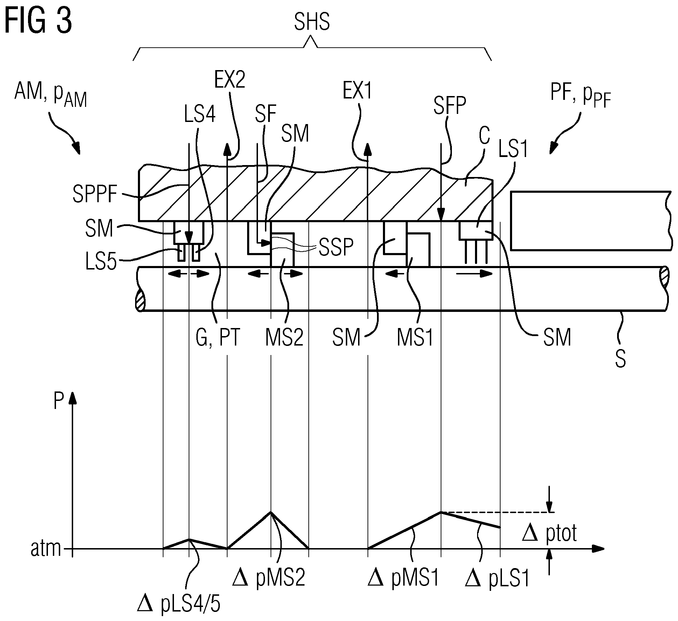

Figur 3 zeigt eine erfindungsgemäße Ausbildung einer Anordnung aus einer Welle S, einem Gehäuse C und einer Wellendichtung SHS umfassend mehrere Dichtungsmodule SM. Zu den Dichtungsmodulen gehören beginnend von dem Inneren des Gehäuses C ein Druckerhöhungslabyrinth LS1 ausgebildet als Labyrinthwellendichtung, eine Hauptdichtung MS1, ausgebildet als eine einfache Trockengasdichtung, eine zweite Hauptdichtung MS2, ausgebildet als eine radiale Doppeldichtung gemäß Figur 2 und eine Anordnung von zwei Zusatzwellendichtungen LS4, LS5, die als Labyrinthwellendichtungen hintereinander angeordnet sind.

Der Umgebungsdruck PAM unterscheidet sich von dem Abdichtdruck PPF im Betriebszustand durch eine Druckdifferenz ΔPtot, welche Druckdifferenz ΔPtot zu Anteilen aufgeteilt an den einzelnen Dichtungsmodulen SM jeweils als Teildruckdifferenz ΔPi anliegt. Die erste Hauptdichtung MS1 ist derart ausgebildet, dass an dieser die größte, jeweils über das Dichtungsmodul betrachtete Teildruckdifferenz ΔPi anliegt bzw. abgebaut wird.

Im Inneren des Gehäuses C herrscht Abdichtdruck PPF eines Prozessfluids PF. Zwischen dem Druckerhöhungslabyrinth LS1 und der ersten Hauptdichtung MS1 wird ein Sperrspülfluid SPF zugeführt, welches gereinigtes Prozessfluid PF mit einem Überdruck gegenüber dem Abdichtdruck hat. Diese Zuführung verhindert eine Verschmutzung der gesamten Dichtungsanordnung aus einem mit Schmutz beladenen Prozessfluid PF. Soll das Prozessfluid hinreichend sauber und der Abdichtdruck PPF genügend groß sein, kann das Druckerhöhungslabyrinth LS1 und die zweite Zusatzwellendichtung LS2 entfallen. Zwischen der ersten Hauptdichtung MS1 und der zweiten Hauptdichtung MS2 befindet sich eine erste Ableitung EX1, die das aus der ersten Hauptsicht MS1 nach außen strömende Prozessfluid PF ableitet. In der zweiten Hauptdichtung MS2 wird Sperrfluid SF in Form von z.B. Stickstoff mit einem Überdruck zugeführt, so dass sich eine Abströmung durch die beiden Dichtflächenpaare SSP der radialen Doppeldichtung sowohl inwärtig als auch auswärtig ergibt. Zwischen der zweiten Hauptdichtung MS2 und den auswärtig folgenden Dichtungen befindet sich eine zweite Ableitung EX2, welches ein Fluid, das aus der zweiten Hauptdichtung MS1 und auswärtig folgenden Dichtungskombination entstammt, abführt. Außerhalb des Gehäuses befindet sich die Umgebung AM unter einem Umgebungsdruck PAM. Zwischen den beiden Zusatzwellendichtungen LS4 und LS5 am äußeren Ende der Anordnung wird eine Separationsfluid SPPF zugeleitet, das in beiden Richtungen entweicht und etwaige Verschmutzungen von außen an dem Eintritt in die Anordnung hindern soll. Bei dem Separationsfluid SPPF handelt es sich entweder um das gereinigte Medium der Umgebung oder ein inertes Fluid, beispielsweise um Stickstoff.

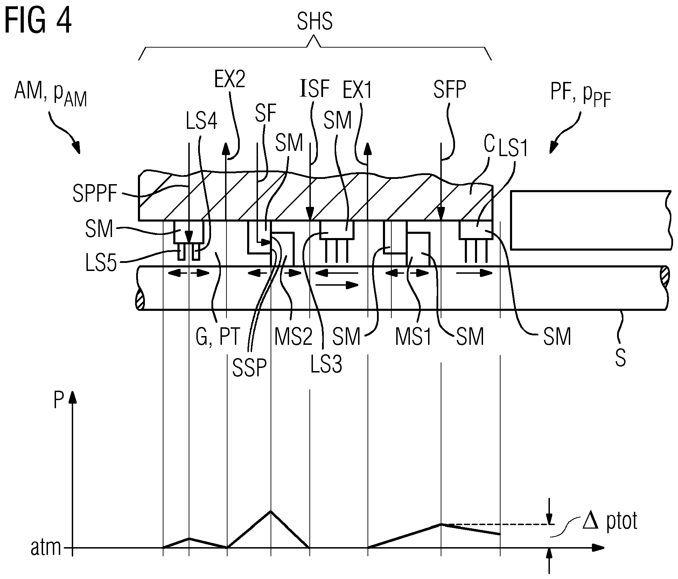

In der Figur 4 ist die Anordnung der Figur 3 ergänzt um eine dritte Zusatzwellendichtung LS3, die als Labyrinthdichtung ausgebildet ist, zwischen den beiden Hauptdichtungen MS1, MS2. Die erste Ableitung EX1 befindet sich inwärtig dieser zusätzlichen dritten Zusatzwellendichtung LS3.
Zwischen der zusätzlichen dritten Zusatzwellendichtung LS3 und der zweiten Hauptdichtung MS2 wird ein Zwischensperrfluid ISF, beispielsweise Stickstoff eingeleitet. Hierdurch wird erreicht, dass kein Sperrfluid SF der ersten Hauptdichtung MS1 an die zweite Hauptdichtung MS2 gelangen kann..

Der in Figur 3 und 4 dargestellte Druckverlauf über die axiale Erstreckung der Dichtungsanordnung zeigt, dass der Druck P des verwendeten Sperrfluids SF über den anderen Drücken liegt und dementsprechend in einem Betriebszustand stets eine sichere Dichtwirkung gewährleistet ist.

## Patentansprüche

1. Wellendichtung (SS) zur Abdichtung eines Spaltes (G) einer Durchführung (PT) einer Welle (S) durch ein Gehäuse (C), wobei sich im Inneren (IN) des Gehäuses (C) ein Prozessfluid (PF) unter einem Abdichtdruck (PPF) und außerhalb des Gehäuses (C) ein Umgebungsfluid (AF) unter einem Umgebungsdruck (PAM) befindet, wobei die Wellendichtung (SS) mehr als ein Dichtungsmodul (SM), mindestens eine Fluidzuführung (FF) und eine
Fluidableitung (FS) umfasst, wobei sich der
Umgebungsdruck (PAM) von dem Abdichtdruck (PPF) im Betriebszustand durch eine Druckdifferenz (ΔPtot) unterscheidet, welche Druckdifferenz (ΔPtot) zu Anteilen aufgeteilt an den einzelnen Dichtungsmodulen (SM) jeweils als Teildruckdifferenz (ΔPi) anliegt,
wobei die Dichtungsmodule (SM) mindestens eine Hauptdichtung (MS1) umfassen, welche Hauptdichtung (MS1) derart ausgebildet ist, dass an dieser die größte Teildruckdifferenz (ΔPi) anliegt,
wobei zwischen den Dichtungsmodule (SM) mindestens eine erste Fluidableitung (EX1) vorgesehen ist, mittels derer ein erstes Ableitungsfluid (FLEX1) ausgeschleust wird,
wobei die erste Hauptdichtung als einfache Gasdichtung ausgebildet ist, wobei die erste Hauptdichtung (MS1) derart ausgebildet ist, dass im normalen, störungsfreien Betrieb und beim An- und Abfahren an dieser die größte Teildruckdifferenz (ΔPi) anliegt, ausgehend vom größten Druckniveau von innen nach außen, wobei die
Dichtungsmodule (SM) mindestens eine zweite
Hauptdichtung (MS2) umfassen die derart ausgebildet ist, dass bei Störung der ersten Hauptdichtung (MS1) an dieser die größte Teildruckdifferenz (ΔPi) anliegt, ausgehend vom größten Druckniveau von innen nach außen,
und die zweite Hauptdichtung (MS2) als eine radiale Doppeldichtung (RDS) ausgebildet ist,
welche bestimmt ist, durch zwei Gasdichtungen (DGS), mit jeweils einer rotierenden Dichtfläche (RSS) und einer stehenden Dichtfläche (SSS), welches Dichtflächenpaar (SSP) sich jeweils in einer Dichtebene (SEP) gegenüber steht, wobei die beiden Dichtebenen eine im Wesentlichen zur Welle (S) radiale Erstreckung aufweisen, wobei sich ein erstes Dichtflächenpaar (SSP) der beiden Dichtflächenpaare (SSP) auf einem größeren Radius befindet als das zweite Dichtflächenpaar (SSP) und wobei die
stehenden Dichtflächen (SSS) und rotierenden
Dichtflächen (RSS) der beiden Dichtflächenpaare (SSP) jeweils an einem gemeinsamen Träger (RSUP, SSUP), nämlich einem stehenden Träger (SSUP) und einem rotierenden Träger (RSUP), befestigt sind, und die Dichtflächen (RSS, SSS) der Dichtflächenpaare (SSP) elastisch gegeneinander verspannt sind, indem entweder mindestens der stehende Träger (SSUP) oder der rotierende Träger (RSUP) mittels eines elastischen Elements (EEL) vorgespannt ist, wobei zwischen den beiden Dichtflächenpaaren (SSP) eine sich in Umfangsrichtung erstreckende Sperrfluidkammer (SFC) vorgesehen ist, welche mittels einer Sperrfluidzuleitung (SFS) mit Sperrfluid (SF) beaufschlagbar ist, **dadurch gekennzeichnet, dass** zwischen den beiden Hauptdichtungen (MS1, MS2) eine dritte Zusatzwellendichtung (LS3) angeordnet ist.

2. Wellendichtung (SS) nach Anspruch 1,
wobei der stehende Träger (SSUP) mittels des elastischen Elementes (EEL) vorgespannt ist.

3. Wellendichtung (SS) nach Anspruch 1 oder 2,
wobei die Dichtflächenpaare (SSP) zu der axialen Erstreckung der Welle koaxial angeordnet sind.

4. Wellendichtung (SS) nach einem der vorhergehenden Ansprüche 1 bis 3,
wobei die zweite Hauptdichtung (MS2) mit Sperrfluid (SF) beaufschlagt ist.

5. Wellendichtung (SS) nach Anspruch 4,
wobei die Dichtungsmodule (SM) mindestens eine erste Hauptdichtung (MS1) als einfache Trockengasdichtung und eine zweite Hauptdichtung (MS2) als radiale Doppeldichtung, die mit einem Zwischensperrfluid (ISF) als Sperrfluid (SF) beaufschlagt wird, umfassen und zwischen den beiden Hauptdichtungen (MS1, MS2) die mindestens eine erste Fluidableitung (EX1) vorgesehen ist.

6. Wellendichtung (SS) nach Anspruch 5,
wobei die erste Fluidableitung (EX1) auf der innenwärtigen Seite der dritten Zusatzwellendichtung (LS3) angeordnet ist.

7. Wellendichtung (SS) nach mindestens einem der vorhergehenden Ansprüche 1 bis 6,
wobei zwischen der zweiten Hauptwellendichtung (MS2) und der dritten Zusatzwellendichtung (LS3) eine Zuführung von einem Zwischensperrfluid (ISF) vorgesehen ist.

8. Wellendichtung (SS) nach mindestens einem der vorhergehenden Ansprüche 1 bis 7,
wobei innenwärtig der ersten Hauptwellendichtung (MS1) eine zweite Zusatzwellendichtung (LS1, LS2) angeordnet ist.

9. Wellendichtung (SS) nach Anspruch 8,
wobei zwischen der ersten Hauptdichtung (MS1) und der zweiten Zusatzwellendichtung (LS1) eine Zuführung von einem Spülfluid (SPF) vorgesehen ist.

10. Wellendichtung (SS) nach mindestens einem der vorhergehenden Ansprüche 1 bis 9,
wobei auswärtig der zweiten Hauptdichtung (MS2) zwei Zusatzwellendichtungen, (LS4, LS5) hintereinander angeordnet sind, eine innere vierte Zusatzwellendichtung (LS4) und eine äußere fünfte Zusatzwellendichtung (LS5).

11. Wellendichtung (SS) nach Anspruch 10,
wobei zwischen der vierten Zusatzwellendichtung (LS4) und der fünften Zusatzwellendichtung (LS5) eine Zuleitung eines Separationsfluids (SPPF) angeordnet ist.

12. Wellendichtung (SS) nach mindestens einem der vorhergehenden Ansprüche 10 oder 11,
wobei zwischen der zweiten Hauptdichtung (MS2) und der vierten Zusatzwellendichtung (LS4) eine zweite Ableitung (EX2) vorgesehen ist.

13. Wellendichtung (SS) nach mindestens einem der vorhergehenden Ansprüche 1 bis 12,
wobei die erste Ableitung (EX1) und die zweite Ableitung (EX2) in eine gemeinsame Ableitung (EX) münden.

14. Anordnung mit einer Wellendichtung (SS) nach mindestens einem der vorhergehenden Ansprüche.

## Claims

1. Shaft seal (SS) for sealing a gap (G) of a penetration (PT) of a shaft (S) through a casing (C), wherein in the interior (IN) of the casing (C) there is a process fluid (PF) under a sealing pressure (PPF), and outside the casing (C) there is an ambient fluid (AF) under an ambient pressure (PAM), wherein the shaft seal (SS) comprises more than one sealing module (SM), at least one fluid feed (FF) and a fluid drain (EX), wherein the ambient pressure (PAM) differs from the sealing pressure (PPF) by a pressure differential (ΔPtot) in the operating state, which pressure differential (ΔPtot), divided into proportions, is applied to the individual sealing modules (SM) in each case as a partial pressure differential (ΔPi),
wherein the sealing modules (SM) comprise at least one main seal (MS1), which main seal (MS1) is designed in such a way that the greatest partial pressure differential (ΔPi) is applied to this,
wherein between the sealing modules (SM) provision is made for at least one first fluid drain (EX1) by means of which a first drain fluid (FLEX1) is discharged,
wherein the first main seal is designed as a simple gas seal, wherein the first main seal (MS1) is designed in such a way that, during normal, trouble-free operation and during starting and shutting down, the greatest partial pressure differential (ΔPi) is applied to this, starting from the highest pressure level from the inside outwards, wherein the sealing modules (SM) comprise at least one second main seal (MS2) which is designed in such a way that, in the event of a malfunction of the first main seal (MS1), the greatest partial pressure differential (ΔPi) is applied to this second main seal, starting from the highest pressure level from the inside outwards, and the second main seal (MS2) is designed as a radial double seal (RDS), which is defined by two gas seals (DGS) with a rotating sealing surface (RSS) and a stationary sealing surface (SSS) in each case, which sealing surface pair (SSP) is oppositely disposed in each case in a sealing plane (SEP), wherein the two sealing planes have an essentially radial extent in relation to the shaft (S), wherein a first sealing surface pair (SSP) of the two sealing surface pairs (SSP) is located on a larger radius than the second sealing surface pair (SSP) and wherein the stationary sealing surfaces (SSS) and rotating sealing surfaces (RSS) of the two sealing surface pairs (SSP) are fastened in each case on a common carrier (RSUP, SSUP), specifically a stationary carrier (SSUP) and a rotating carrier (RSUP), and the sealing surfaces (RSS, SSS) of the sealing surface pairs (SSP) are elastically tensioned towards each other by either at least the stationary carrier (SSUP) or the rotating carrier (RSUP) being pretensioned by means of an elastic element (EEL), wherein between the two sealing surface pairs (SSP) provision is made for a circumferentially extending sealing fluid chamber (SFC) which is exposable to admission of sealing fluid (SF) by means of a sealing fluid feed (SFS),
**characterized in that**
a third additional shaft seal (LS3) is arranged between the two main seals (MS1, MS2).

2. Shaft seal (SS) according to Claim 1,
wherein the stationary carrier (SSUP) is pretensioned by means of the elastic element (EEL).

3. Shaft seal (SS) according to Claim 1 or 2,
wherein the sealing surface pairs (SSP) are arranged coaxially to the axial extent of the shaft.

4. Shaft seal (SS) according to one of the preceding Claims 1 to 3, wherein the second main seal (MS2) is exposed to admission of sealing fluid (SF).

5. Shaft seal (SS) according to Claim 4,
wherein the sealing modules (SM) comprise at least one first main seal (MS1) as a simple dry gas seal and a second main seal (MS2) as a radial double seal which is exposed to admission of an intermediate sealing fluid (ISF) as sealing fluid (SF), and the at least one fluid drain (EX1) is provided between the two main seals (MS1, MS2).

6. Shaft seal (SS) according to Claim 5,
wherein the first fluid drain (EX1) is arranged on the inward side of the third additional shaft seal (LS3).

7. Shaft seal (SS) according to at least one of the preceding Claims 1 to 6,
wherein between the second main shaft seal (MS2) and the third additional shaft seal (LS3) provision is made for a feed of an intermediate sealing fluid (ISF).

8. Shaft seal (SS) according to at least one of the preceding Claims 1 to 7,
wherein a second additional shaft seal (LS1, LS2) is arranged inward of the first main shaft seal (MS1).

9. Shaft seal (SS) according to Claim 8,
wherein between the first main seal (MS1) and the second additional shaft seal (LS2) provision is made for a feed of a flushing fluid (SPF).

10. Shaft seal (SS) according to at least one of the preceding Claims 1 to 9,
wherein outward of the second main seal (MS2) two additional shaft seals (LS4, LS5) are arranged in series, these being an inner fourth additional shaft seal (LS4) and an outer fifth additional shaft seal (LS5).

11. Shaft seal (SS) according to Claim 10,
wherein a feed of a separation fluid (SPPF) is arranged between the fourth additional shaft seal (LS4) and the fifth additional shaft seal (LS5).

12. Shaft seal (SS) according to at least one of the preceding Claims 10 and 11,
wherein between the second main seal (MS2) and the fourth additional shaft seal (LS4) provision is made for a second drain (EX2).

13. Shaft seal (SS) according to at least one of the preceding Claims 1 to 12,
wherein the first drain (EX1) and the second drain (EX2) lead into a common drain (EX).

14. Arrangement with a shaft seal (SS) according to at least one of the preceding claims.

## Revendications

1. Etanchéité (SS) d'arbre pour rendre étanche un intervalle (G) de passage (PT) d'un arbre (S) dans une enveloppe (C), un fluide (PF) de processus se trouvant à l'intérieur (IN) de l'enveloppe (C), sous une pression (PF) d'étanchéité et un fluide (AF) ambiant se trouvant à l'extérieur de l'enveloppe (C), sous une pression (PAM) ambiante, l'étanchéité (SS) d'arbre comprenant plus d'un module (SM) d'étanchéité, au moins une arrivée (FF) de fluide et au moins une évacuation (FS) de fluide, la pression (PAM) ambiante se distinguant de la pression (PPF) d'étanchéité, dans l'état de fonctionnement, par une différence (ΔPtot) de pression, laquelle différence (ΔPtot) de pression s'applique, en étant subdivisée en proportions, aux divers modules (SM) d'étanchéité, respectivement comme différence (ΔPi) de pression partielle, dans laquelle les modules (SM) d'étanchéité comprennent au moins une étanchéité (MS1) principale, laquelle étanchéité (MS1) principale est constituée de manière à ce que la différence (ΔPi) de pression partielle s'y applique,
dans laquelle il est prévu, entre les modules (SM) d'étanchéité, au moins une évacuation (EX1) de fluide, au moyen de laquelle un premier fluide (FLEX1) d'évacuation est évacué,
dans laquelle la première étanchéité principale est constituée sous la forme d'une simple étanchéité au gaz, dans laquelle la première étanchéité (MS1) principale est constituée de manière à ce qu'en fonctionnement normal, sans perturbation, et lors d'un démarrage et d'un arrêt, la différence (ΔPi) de pression partielle la plus grande s'y applique, en partant du niveau de pression le plus grand, de l'intérieur vers l'extérieur, les modules (SM) d'étanchéité comprenant au moins une deuxième étanchéité (MS2) principale, constituée de manière à ce que, si la première étanchéité (MS1) principale est défaillante, la différence (ΔPi) de pression partielle la plus grande s'y applique, en partant du niveau de pression le plus grand de l'intérieur vers l'extérieur,
et la deuxième étanchéité (MS2) principale est constituée sous la forme d'une étanchéité (RDS) double radiale, laquelle est définie par deux étanchéités (DGS) au gaz, ayant respectivement une surface (RSS) d'étanchéité tournante et une surface (SSS) d'étanchéité fixe, laquelle paire (SSP) de surfaces d'étanchéité se font face respectivement dans un plan (SEP) d'étanchéité, les deux plans d'étanchéité ayant sensiblement une étendue radiale par rapport à l'arbre (S), une première paire (SSP) de surfaces d'étanchéité des deux paires (SSP) de surfaces d'étanchéité se trouvant sur un rayon plus grand que la deuxième paire (SSP) de surfaces d'étanchéité et dans laquelle les surfaces (SSS) d'étanchéité fixes et les surfaces (RSS) d'étanchéité tournantes des deux paires (SSP) de surfaces d'étanchéité sont fixées respectivement à un support (RSUP, SSUP commun, à savoir un support (SSUP) fixe et un support (RSUP) tournant et les surfaces (RSS, SSS) d'étanchéité des paires (SSP) de surfaces d'étanchéité sont serrées l'une contre l'autre élastiquement, par le fait qu'ou bien au moins le support (SSUP) fixe, ou bien le support (RSUP) tournant, est précontraint au moyen d'un élément (EEL) élastique, dans laquelle il est prévu, entre les deux paires (SSP) de surfaces d'étanchéité, une chambre (SFC) de fluide d'arrêt, qui s'étend dans la direction périphérique et qui peut être alimentée en fluide (SF) d'arrêt au moyen d'un conduit (SFS) d'entrée de fluide d'arrêt,
**caractérisée en ce qu'**une troisième étanchéité (LS3) d'arbre supplémentaire est disposée entre les deux étanchéités (MS1, MS2) principales.

2. Etanchéité (SS) d'arbre suivant la revendication 1,
dans laquelle le support (SSUP) fixe est précontraint au moyen de l'élément (EEL) élastique.

3. Etanchéité (SS) d'arbre suivant la revendication 1 ou 2, dans laquelle les paires (SSP) de surfaces d'étanchéité sont disposées coaxialement à l'étendue axiale de l'arbre.

4. Etanchéité (SS) d'arbre suivant l'une des revendications précédentes 1 à 3,
dans laquelle la deuxième étanchéité (MS2) principale est alimentée en fluide (SF) d'arrêt.

5. Etanchéité (SS) d'arbre suivant la revendication 4,
dans laquelle les modules (SM) d'étanchéité comprennent au moins une première étanchéité (MS1) principale, sous la forme d'une étanchéité simple au gaz sec, et une deuxième étanchéité (MS2) principale, sous la forme d'une étanchéité double radiale, qui est alimentée en fluide (SF) d'arrêt par un fluide (ISF) d'arrêt intermédiaire et le au moins un premier conduit (EX1) d'évacuation de fluide est prévu entre les deux étanchéités (MS1, MS2) principales.

6. Etanchéité (SS) d'arbre suivant la revendication 5,
dans laquelle le premier conduit (EX1) d'évacuation de fluide est disposé du côté tourné vers l'intérieur de la troisième étanchéité (LS3) d'arbre intermédiaire.

7. Etanchéité (SS) d'arbre suivant au moins l'une des revendications précédentes 1 à 6,
dans laquelle une arrivée d'un fluide (ISF) d'arrêt intermédiaire est prévue entre la deuxième étanchéité (MS2) d'arbre principale et la troisième étanchéité (LS3) d'arbre supplémentaire.

8. Etanchéité (SS) d'arbre suivant au moins l'une des revendications précédentes 1 à 7,
dans laquelle une deuxième étanchéité (LS1, LS2) d'arbre supplémentaire est montée du côté intérieur de la première étanchéité (MS1) d'arbre principale.

9. Etanchéité (SS) d'arbre suivant la revendication 8,
dans laquelle une arrivée d'un fluide (SPF) de lavage est prévue entre la première étanchéité (MS1) principale et la deuxième étanchéité (LS1) d'arbre supplémentaire.

10. Etanchéité (SS) d'arbre suivant au moins l'une des revendications précédentes 1 à 9,
dans laquelle il est monté, du côté extérieur de la deuxième étanchéité (MS2) principale, l'une derrière l'autre, deux étanchéités (LS4, LS5) d'arbre supplémentaires, une quatrième étanchéité (LS4) d'arbre supplémentaire intérieure et une cinquième étanchéité (LS5) d'arbre supplémentaire extérieure.

11. Etanchéité (SS) d'arbre suivant la revendication 10,
dans laquelle un conduit d'arrivée d'un fluide (SPPF) de séparation est disposé entre la quatrième étanchéité (LS4) d'arbre supplémentaire et la cinquième étanchéité (LS5) d'arbre supplémentaire.

12. Etanchéité (SS) d'arbre suivant au moins l'une des revendications précédentes 10 ou 11,
dans laquelle il est prévu un deuxième conduit (EX2) d'évacuation entre la deuxième étanchéité (MS2) principale et la quatrième étanchéité (LS4) d'arbre supplémentaire.

13. Etanchéité (SS) d'arbre suivant au moins l'une des revendications précédentes 1 à 12,
dans laquelle le premier conduit (EX1) d'évacuation et le deuxième conduit (EX2) d'évacuation débouchent dans un conduit (EX) d'évacuation commun.

14. Agencement comprenant une étanchéité (SS) d'arbre suivant au moins l'une des revendications précédentes.
